Europäisches Patentamt

European Patent Office

Office européen des brevets

(11) Publication number:

**0 082 505
B1**

(12) **EUROPEAN PATENT SPECIFICATION**

(45) Date of publication of patent specification: **02.04.86**

(21) Application number: **82111742.1**

(22) Date of filing: **17.12.82**

(51) Int. Cl.⁴: **G 11 B 17/04**

(54) Cartridge receiving apparatus.

(30) Priority: **18.12.81 JP 203690/81
21.12.81 JP 205343/81**

(43) Date of publication of application:
**29.06.83 Bulletin 83/26**

(45) Publication of the grant of the patent:
**02.04.86 Bulletin 86/14**

(84) Designated Contracting States:
**BE DE FR GB LU. NL**

(56) References cited:
**DE-A-2 743 615
DE-A-3 026 432
FR-A-2 254 086
US-A-4 272 795**

(73) Proprietor: **Hitachi, Ltd.
5-1, Marunouchi 1-chome
Chiyoda-ku Tokyo 100 (JP)**

(72) Inventor: **Konno, Kazutoshi**
**48, Shioiricho-3-chome
Yokosuka-shi (JP)**
Inventor: **Sampei, Tohru**
**18-8, Ishigamidai-1-chome
Oisomachi, Naka-gun Kanagawa-ken (JP)**
Inventor: **Wakabayashi, Manabu**
**Hitachiyoshida-Apartment House 594,
Yoshidacho
Totsuka-ku Yokohama (JP)**
Inventor: **Minami, Kihachiroo**
**Hitachihachimanyama-Apartment House
1545, Yoshidacho Totsuka-ku Yokohama (JP)**
Inventor: **Gotoh, Hidehumi**
**Keimeiryo, 850, Maiokacho
Totsuka-ku Yokohama (JP)**
Inventor: **Utsugi, Isao**
**217, Hidakacho-1-chome
Hitachi-shi (JP)**
Inventor: **Ohuchi, Yoshio**
**23-6, Minamidai Tokaimura
Naka-gun Ibaraki-ken (JP)**

**0 082 505**

(72) Inventor: **Shiobara, Katsuhiro**
**Hattanbarajutaku 1-go, 7-3 Kokubuncho-2-**
**chome**
**Hitachi-shi (JP)**

(74) Representative: **Altenburg, Udo, Dipl.-Phys.**
**et al**
**Patent- und Rechtsanwälte Bardehle-**
**Pagenberg-Dost-Altenburg & Partner**
**Postfach 86 06 20**
**D-8000 München 86 (DE)**

## Description

### Background of the Invention

*(1) Field of the Invention*

The present invention relates to a cartridge (cassette) receiving apparatus which houses a medium in which signals are recorded by a magnetic, optical, mechanical or other similar means.

*(2) Description of the Prior Art*

A signal reproducing system or a signal recording system provided with a horizontally arranged cartridge (cassette) receiving apparatus is well known. In general, in these apparatuses a cartridge (cassette) is inserted into a receiving apparatus through a slot formed in a housing of the system overcoming the elasticity of an ejector spring, and when a medium with signals recorded is inserted completely, the medium is connected to a driving mechanism. After the cartridge has been placed completely in the receiving apparatus, the medium is driven by a signal reproducing mechanism.

To withdraw the cartridge from the receiving apparatus, the driving mechanism stops, the medium is removed from the driving mechanism, and the medium is ejected from the slot by means of the spring force of the ejector spring. However, the cartridge must not spring out from the receiving device owing to a vibration or shock prior to the stopping of the driving mechanism. Should the cartridge be readily ejected from the receiving device, or, if not, should it be temporarily removed from the receiving device, the recording of signals in the medium or the reproduction of signals from the medium would be carried out unreliably. It is essential, therefore, that the cartridge can be easily loaded in the receiving device, and at the same time that the cartridge be held securely, and furthermore ejected with ease by a simple operation, when necessary.

A cartridge receiving apparatus as mentioned in the preamble of claim 1, is known from DE—A—3 026 432.

### Summary of the Invention

The object of this invention lies in offering a cartridge receiving apparatus enabling a cartridge to be loaded easily, to be held securely, and to be ejected with ease, when necessary. More particularly, this invention aims at offering a cartridge receiving apparatus with an extremely simple structure in which, when the cartridge is advanced in one direction and inserted into the apparatus, subsequently the apparatus automatically leads the cartridge to a proper position, loading the cartridge with ease and properly, and when the cartridge is ejected from the receiving apparatus, the cartridge can be ejected by an extremely simple operation.

These objects are obtained within a cartridge receiving apparatus of the type mentioned in the preamble of claim 1 according to the invention by the features of the characterizing part of claim 1.

### Brief Description of the Drawings

Fig. 1 is a side elevational view of the essential parts of a receiving apparatus in accordance with this invention;

Fig. 2 is an exploded perspective view of the essential parts of the receiving apparatus of this invention;

Figs. 3a, 3b and 3c are side elevational views each illustrating the state of the cartridge prior to loading in the cartridge container, the loaded state, the state of being ejected from the cartridge container;

Fig. 4 is a front elevational view of the sliding plate;

Fig. 5 is a front elevational view showing a second example of the sliding plate;

Figs. 6a, 6b and 6c are front elevational views of the guide plates and sliding plate explanatory of the operation of the second example of the sliding plate; and

Fig. 7 is a perspective view of an erroneous operation preventing mechanism.

### Description of the Preferred Embodiments

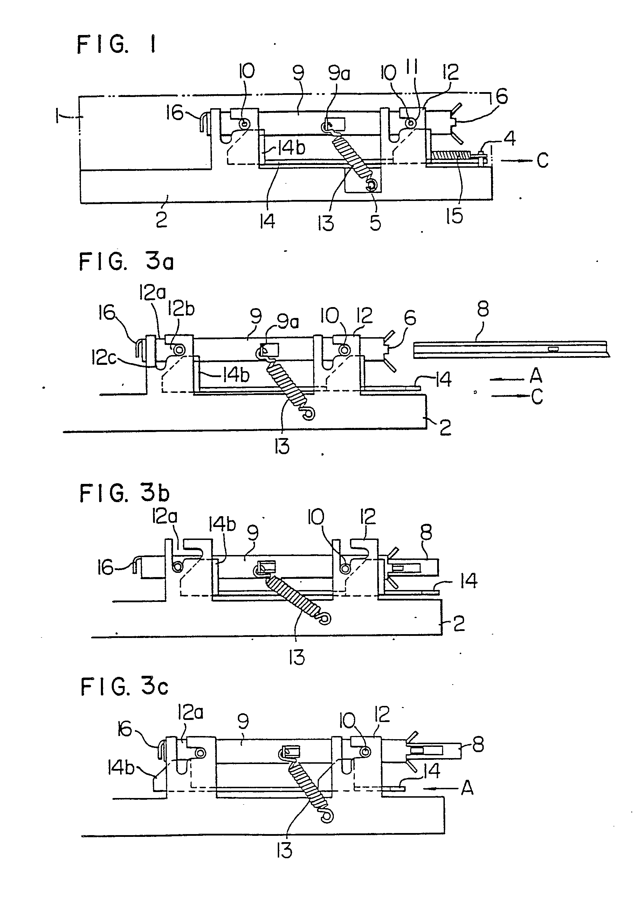

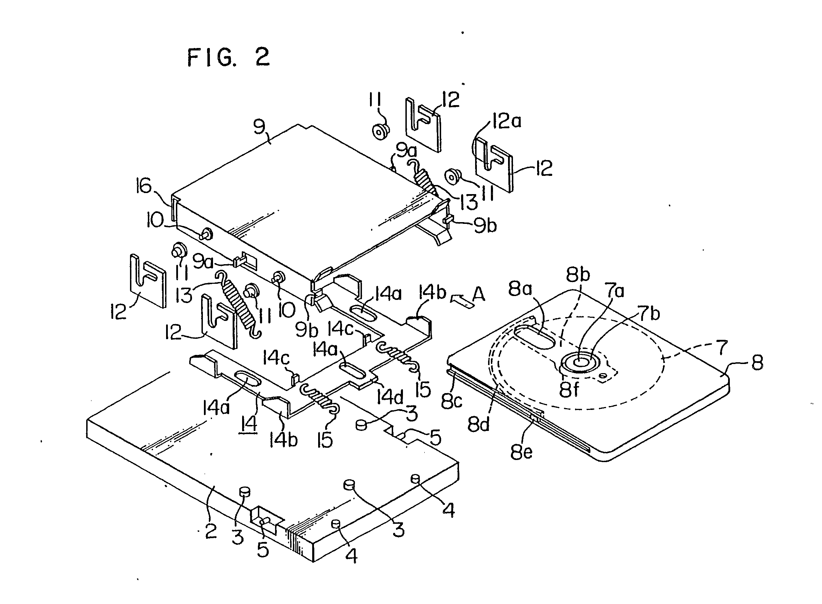

Preferred embodiments of this invention will be explained hereinunder by referring to the drawings. Referring first to Fig. 1, a box-like housing 1 shown by two-dot chain lines houses a system for recording or reproducing signals. A chassis 2 as well as the receiving apparatus of this invention mounted on the chassis 2 are accommodated in the housing 1. The essential parts of the receiving apparatus consist of a cartridge container 9, guide plates 12, and a sliding plate 14, and the cartridge container 9 is formed as the housing for containing the cartridge and is open at its front side. Each guide plate 12 may be formed separately and fixed to the chassis 2, or may alternatively be formed integrally with the chassis.

As illustrated in Fig. 2, each of the side walls of the cartridge container 9 is provided with pins 10 as well as a projection 9a. If necessary, a rotatable sleeve 11 may be mounted on the pin 10. The pin 10 engages with a guide channel 12a provided in the guide plate 12. A tension spring 13 is retained at one end by the projection 9a provided on each side wall of the cartridge container 9, and the other end of the tension spring 13 is retained by a projection 5 provided in the chassis 2. The tension spring 13 is stretched diagonally. As for the sliding plate 14, pins 3 provided in the chassis 2 are inserted into long holes 14a provided in the sliding plate 14, and is retained slidably on the chassis 2 in the direction of the arrow A in Fig. 2. The sliding plate 14 is pulled in the direction of the arrow C in Fig. 1 by means of tension springs 15 each retained at one end by a projection 14c provided on the sliding plate 14 and at the other end by a projection 4 provided on the chassis 2. A cartridge 8 is moved in the direction of the arrow A and inserted into the cartridge container 9 through an opening 6 provided in the cartridge container. A projection 14d provided in the sliding plate 14 has a pushbutton (not illustrated) which extends by penetrating the wall portion of the housing 1, so as to operate the sliding plate externally of the housing.

A cartridge 8, shown in Fig. 2, contains, for instance, a magnetic disc 7. The magnetic disc 7 has a central aperture 7a, and a hub 7b may be provided in the periphery of the central aperture 7a, if necessary. The cartridge 8 is also provided with a central aperture 8f, and the disc 7 is rotated through this central aperture 8f. In addition, the cartridge 8 is provided with a slot 8a through which the signals are recorded in the disc 7 or recorded signals are reproduced. Furthermore, the slot 8a of the cartridge 8 has a shutter 8b, and the slit 8a is opened or closed as a projection 8e provided at the end of a belt 8d fixed to the shutter 8b slides along a groove 8c provided on one side of the cartridge 8. The projection 8e slides as a projection 9b provided in the container 9 is fitted to the groove 8c, when, for instance, the cartridge is housed in the container 9.

Figs. 3a, 3b and 3c show the state of the cartridge 8 prior to being housed in the container 9, the housed state, and the state of the ejection of the cartridge 8 from the container 9. As shown in Fig. 3a, the cartridge is moved in the direction of the arrow A and inserted into the opening 6 of the container 9. When the cartridge 8 is inserted fully into the container 9, the cartridge 8 contacts with a wall 16 opposite to the opening 6. When the cartridge 8 is further moved in the direction of the arrow A with a force greater than the horizontal component of the tension developed by the tension spring 13, the tension spring 13 stretches, which, in turn, allows the pin 10 to move along a horizontal guide channel 12b, and both the cartridge 8 and container 9 are moved in the direction of the arrow A. When the pin 10 reaches the end portion of the guide channel 12b, by the vertical component of the tension developed by the tension spring 13, the pin 10 drops along a vertical guide channel 12c, the tension spring 13 shrinks, and at the same time the container 9 is lowered. When the pin 10 reaches the lowermost end of the vertical guide channel 12c, the movement (lowering) of the container 9 stops. In this condition, a medium housing in the cartridge 8, e.g., the magnetic disc 7, is connected to a driving mechanism (not illustrated). If the pin 10 is present in the vertical guide channel 12c, the container 9 cannot be moved in the direction of the arrow A or in the reverse direction. Then, the container 9 is held in the dropped position by the vertical component of the tension developed by the tension spring 13.

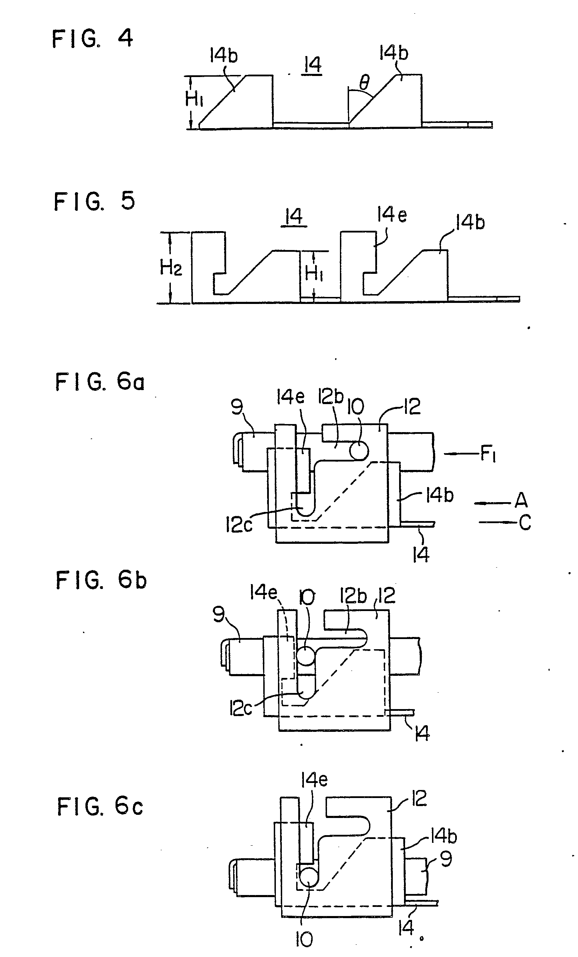

In other words, in the cartridge receiving apparatus in accordance with this invention, when the cartridge 8 is housed in the container 9 and further only pushed, the medium housed in the cartridge 8 is easily mounted on the driving mechanism, and the cartridge 8 is held securely in the container 9. On the other hand, as shown in Fig. 3c, the sliding plate 14 is moved in the direction of the arrow A by overcoming the tension of the tension spring 15 by the pressing of the pushbutton (not illustrated), the tension spring 15 stretches, and the sleeve 11 fitted to the pin 10 provided in the cassette container 9 is brought into contact with an inclined part 14b of the sliding plate 14. Furthermore, when the sliding plate 14 is moved, the tension spring 13 stretches, and the sleeve 11 and the pin 10 rise along the inclined part 14b and along the vertical guide channel 12c. When the pin 10 reaches the position of the horizontal guide channel 12b, the tension spring 13 shrinks again, and the pin 10 moves along the horizontal guide channel 12b in the direction of the arrow C. Accordingly, the container 9 and the cartridge 8 also move in the direction of the arrow C. As a result, it becomes possible to withdraw the cartridge 8 from the container 9. If the force applied to the sliding plate 14 is removed, the tension spring 15 shrinks, and the sliding plate 14 returns to the position shown in Fig. 3a. Fig. 4 shows the sliding plate 14. The height $H_1$ of the sliding plate 14 must be sufficient to move the pin 10 from the vertical guide channel 12c to the horizontal guide channel 12b. Also, it is preferable that the height $H_1$ is lower than the horizontal guide channel 12b. It goes without saying that the inclination angle $\theta$ of the inclined part 14b must be selected appropriately. If a large inclination angle $\theta$ is selected, the moving distance of the sliding plate 14 becomes large; while if a smaller inclination angle $\theta$ is selected, the moving distance of the sliding plate 14 becomes small. But this necessitates a greater force to move the sliding plate 14.

Fig. 5 shows a second example of the sliding plate. In the sliding plate 14, shown in Fig. 5, an upwardly-extending hook part 14e is formed so as to oppose the inclined part 14b. It is preferable that the height $H_2$ of the hook port 14e is made higher than the height $H_1$ of the inclined part 14b. The function of the hook part 14e is explained by referring to Figs. 6a, 6b and 6c, which are enlarged views of the guide plate 12 and associated parts. When force $F_1$ is applied to the container 9, and the pin 10 moves with the container 9 along the horizontal guide channel 12b in the direction of the arrow A, the pin 10 is brought into contact with the hook part 14e, and the pin 10 moves the hook part 14e in the direction of the arrow A. When the hook part 14e moves, the sliding plate 14 also moves in the direction of the arrow A. When the pin 10 shortly reaches the vertical guide channel 12c, the pin 10 drops along the guide channel 12c. When the pin 10 reaches the lowermost end of the guide channel 12c, the sliding plate 14 moves in the direction of the arrow C, and the hook part 14e engages with the pin 10. In this condition, the pin 10 is held inside the vertical guide channel 12c. Therefore, if the sliding plate 14 having the hook part 14e is used, the pin 10 will not move vertically along the guide channel 12c even if a large vibration is applied to the container 9. Accordingly, the pin 10 is held securely at the lowermost end of the guide channel 12e. If the sliding plate 14 is moved in the direction of the arrow A, the hook part 14e is disengaged, and the pin 10 moves from the guide channel 12c to the guide channel 12b by means of the inclined part 14b.

The sliding plate, shown in Figs. 4 and 5, is biased by the tension spring 15, and is usually placed in the position shown in Fig. 3a. Accordingly, in case that the cartridge 8 is not inserted properly into the container 9, e.g., if the cartridge 8 is inserted obliquely into the container 9, and if the container 9 is pushed in the direction of the arrow A in Fig. 3A with the end of the cartridge 8 collided against the opening 6 of the container 9, the cartridge 8 moves in the direction of the arrow A, and the pin 10 drops along the vertical guide channel 12c without the cartridge 8 being properly housed in the container 9. In this case, the cartridge 8 is not properly loaded in the apparatus.

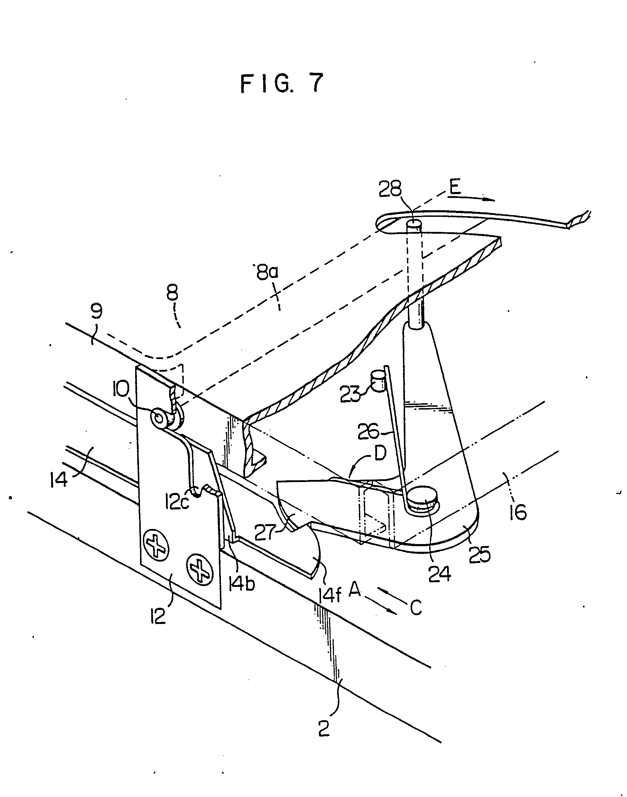

Fig. 7 shows a mechanism preventing the aforementioned erroneous operation. The essential part of this mechanism is a lever 25, which is supported rotatably by a pin 24. The pin 24 is fixed to the chassis 2. A pawl 27 is formed at the end of the lever 25, and the pawl 27 is engaged with a mating recess 14f formed at the end of the sliding plate 14. A rod 28 is fixed to the other end of the lever 25, which extends vertically. A stopper 23 is formed in the chassis 2, and a torsion spring 26 is retained by the stopper 23, the pin 24 and one side portion of the lever 25. The torsion spring 26 acts to rotate the lever 25 in the direction of the arrow D. The stopper 23 prevents the excessive rotation of the lever 25. In the state in which the sliding plate 14 is moved in the direction of the arrow A and the cartridge 8 is ejected from the container 9, the recess 14f of the sliding plate 14 engages with the pawl 27 of the lever 25. As a result, the sliding plate 14 cannot return in the direction of the arrow C. In this condition, the inclined part 14b of the sliding plate 14 closes the vertical guide channel 12c of the guide plate 12. Consequently, even if the container 9 is moved in the direction of the arrow A, the pin 10 cannot lower the vertical guide channel 12c. When the cartridge 8 is housed properly in the container 9, an end surface 8a of the cartridge 8 is moved to contact with the rod 28, which is made to move in the direction of the arrow E. As a result, the lever 25 rotates in the reverse direction of the arrow D, and the pawl 27 is removed from the recess 14f. Then, the sliding plate 14 moves in the direction of the arrow C, permitting the pin 10 to lower the vertical guide channel 12c. In other words, if the mechanism shown in Fig. 7 is used, the pin 10 of the container 9 is allowed to lower the vertical guide channel 12c only when the cartridge 8 has been housed properly in the container 9. Furthermore, the lever 25 may be such that it retains the sliding plate 14 when the cartridge 8 is housed in the container 9, and that the lever 25 is disengaged from the sliding plate 14 when the cartridge 8 has been housed properly in the container 9, thereby allowing the sliding plate 14 to return.

As explained above, the receiving apparatus according to this invention has an extremely simple structure, and the cartridge can be positioned properly in the system by a very simple operation, and held securely therein. Furthermore, the cartridge can be ejected with facility by a simple operation, as required.

**Claims**

1. A cartridge receiving apparatus for receiving a cartridge (8) containing a medium (7) with signals recorded on it, comprising:

a) a cartridge container (9) having a housing provided on one end with an opening (6) for receiving said cartridge (8), said housing having a plurality of pins (10) protruding from side surfaces thereof;

b) guide plates (12) having guide channels (12a) in which said pins provided in said cartridge container can be moved, said guide channels comprising horizontal guide channels (12b) used for locating said pins of the container in a first high position and vertical guide channels (12c) communicating with these horizontal guide channels and used for locating said pins of the container in a second lower position;

c) a chassis (2) to which said guide plates (12) are fixed;

characterized by

d) a sliding plate (14) held slidably on said chassis between a third position and a fourth position, having inclined parts (14b) provided on said sliding plate in parallel with said guide plates, said inclined parts (14b) moving said pins of the cartridge container along said vertical guide channels (12c) from the second low position to said horizontal guide channels, when said sliding plate (14) is slid from the third position to the fourth position;

e) a first tension spring (13), one end of which is retained (9a) by said cartridge container and the other end of which is retained (5) by said chassis, and which is adapted to pull said pins of the cartridge container towards the ends of the horizontal guide channels when said pins are located in said horizontal guide channels, and further adapted to pull said pins towards the ends of the vertical guide channels when said pins are located in said vertical guide channels; and

f) a second tension spring (15), one end of which is retained by said sliding plate (14) and the other end of which is retained by said chassis (2), and which is adapted to move said sliding plate from the fourth position to the third position.

2. A cartridge receiving apparatus according to Claim 1, wherein said sliding plate (14) has hook parts (14e) opposing the inclined parts (14b) thereof in the sliding direction, wherein said hook parts (14e) engage said pins (10) and hold said pins in the second position when said sliding plate (14) is in the third position.

**Revendications**

1. Appareil destiné à recevoir une cartouche (8) contenant un support (7) sur lequel sont enregistrés des signaux, comportant:

a) un conteneur (9) pour cartouche comportant un logement dont une extrémité comporte une ouverture (6) servant à recevoir ladite cartouche (8), ledit logement comportant une pluralité de broches (10) faisant saillie sur les surfaces latérales de la cartouche;

b) des plaques de guidage (12) comportant des canaux de guidage (12a) dans lesquels lesdites broches prévues dans ledit conteneur pour cartouche peuvent être déplacées, lesdits canaux de guidage comportant des canaux de guidage horizontaux (12b) utilisés pour positionner lesdites broches du conteneur dans une première position haute et des canaux de guidage verticaux (12c) communicant avec ces canaux de guidage horizontaux utilisés pour positionner lesdites broches du conteneur dans une seconde position plus basse;

c) un· châssis (2) auquel lesdites plaques de guidage (12) sont fixées;

caractérisé par

d) une plaque coulissante (14) maintenue de façon à pouvoir glisser sur ledit châssis entre une troisième et une quatrième positions, et comportant des parties inclinées (14b) prévues sur ledit plateau coulissant parallèlement auxdites plaques de guidage, lesdites parties inclinées (14b) déplaçant lesdites broches du conteneur pour cartouche le long desdits canaux de guidage verticaux (12c) depuis la seconde position inférieure jusqu'auxdits canaux de guidage horizontaux, lorsque ladite plaque coulissante (14) coulisse depuis la troisième position jusque dans la quatrième position;

e) un premier ressort de traction (13) dont une extrémité est retenue (9a) par ledit conteneur pour cartouche et dont l'autre extrémité est retenue (5) sur ledit châssis, et qui permet de tirer lesdites broches du conteneur pour cartouche en direction des extrémités des canaux de guidage horizontaux lorsque lesdites broches sont situées dans lesdits canaux de guidage horizontaux, et qui est en outre apte à tirer lesdites broches en direction des extrémités des canaux de guidage verticaux lorsque lesdites broches sont situées dans lesdits canaux de guidage verticaux; et

f) un second ressort de traction (15) dont une extrémité est retenue par ladite plaque coulissante (14) et dont l'autre extrémité est retenue par ledit châssis (2), et qui est apte à déplacer ladite plaque coulissante depuis la quatrième position jusque dans la troisième position.

2. Appareil permettant de recevoir une cartouche selon la revendication 1, dans lequel ladite plaque coulissante (14) comporte des parties en forme de crochets (14e) situées en vis-à-vis de parties inclinées (14b) de la plaque suivant la direction de glissement, lesdites parties en forme de crochets (14e) contactant lesdites broches (10) et retenant ces broches dans la seconde position lorsque ladite plaque coulissante (14) se trouve dans la troisième position.

**Patentansprüche**

1. Vorrichtung zur Aufnahme einer Kassette (8), welche einen Träger (7) enthält, auf welchem Signale aufgezeichnet sind, mit

a) einem Kassettenbehälter (9) mit einem Gehäuse, an dessen einem Ende eine Öffnung (6) zur Aufnahme der Kassette (8) vorgesehen ist und welches eine Vielzahl von Stiften (10) aufweist, welche von den Seitenflächen vorspringen,

b) Führungsplatten (12) mit Führungskanälen (12a), in welchen die in dem Kassettenbehälter vorgesehenen Stifte bewegbar sind und welche horizontale Führungskanäle (12b), welche zur Anordnung der Stifte des Behälters in einer ersten hohen Position benutzt werden, und vertikale Führungskanäle (12c) aufweisen, welche mit diesen horizontalen Führungskanälen in Verbindung stehen und zur Anordnung der Stifte des Behälters in einer zweiten niedrigeren Position benutzt werden,

c) einer Grundplatte (2), auf welcher die Führungsplatten (12) befestigt sind, gekennzeichnet durch

d) eine Schiebeplatte (14), welche auf der Grundplatte zwischen einer dritten Position und einer vierten Position verschiebbar gehalten ist, mit geneigten Teilen (14b), welche auf der Schiebeplatte parallel zu den Führungsplatten angeordnet sind, wobei die geneigten Teile (14b) die Stifte des Kassettenbehälters längs der vertikalen Führungskanäle (12c) von der zweiten niedrigen Position zu den horizontalen Führungskanälen bewegen, wenn die Schiebeplatte (14) von der dritten Position zur vierten Position verschoben wird,

e) eine erste Zugfeder (13), deren eines Ende durch den Kassettenbehälter festgehalten wird (9a) und dessen anderes Ende durch die Grundplatte festgehalten wird (5) und welche die Stifte des Kassettenbehälters zu den Enden der horizontalen Führungskanäle ziehen kann, wenn die Stifte in den horizontalen Führungskanälen angeordnet sind, und welche die Stifte zu den Enden der vertikalen Führungskanäle ziehen kann, wenn die Stifte in den vertikalen Führungskanälen angeordnet sind, und

f) eine zweite Zugfeder (15), deren eines Ende durch die Schiebeplatte (14) festgehalten wird und deren anderes Ende durch die Grundplatte (2) festgehalten wird und welche die Schiebeplatte von der vierten Position zur dritten Position bewegen kann.

2. Vorrichtung nach Anspruch 1, bei welcher die Schiebeplatte (14) Hakenteile (14e) gegenüber den geneigten Teilen (14b) in Schieberichtung aufweist, wobei die Hakenteile (14e) mit den Stiften (10) in Eingriff kommen und die Stifte in der zweiten Position halten, wenn die Schiebeplatte (14) in der dritten Position ist.

FIG. 1

FIG. 3a

FIG. 3b

FIG. 3c

# FIG. 2

FIG. 4

FIG. 5

FIG. 6a

FIG. 6b

FIG. 6c

FIG. 7